# EUROPEAN PATENT SPECIFICATION

(11) **EP 2 233 197 B1**
(45) Date of publication and mention of the grant of the patent: **22.01.2014**
(21) Application number: 09176627.9
(22) Date of filing: 20.11.2009
(51) Int. Cl.: B01D 53/94, F01N 3/30, F01N 3/28, F01N 3/10

(54) **Saddle-riding type vehicle**
Sattelfahrzeug
Véhicule à monture

(30) Priority: 25.03.2009 JP 2009074888
(43) Date of publication of application: 29.09.2010
(73) Proprietor: Yamaha Hatsudoki Kabushiki Kaisha, Iwata-shi, Shizuoka-ken 438-8501 (JP)
(72) Inventor: Itou, Yutaka, Shizuoka-ken 438-8501 (JP); Morozumi, Naohiro, Shizuoka-ken 438-8501 (JP)
(74) Representative: Zimmermann, Tankred Klaus

(56) References cited:
- EP-A1- 1 970 547
- EP-A1- 1 992 409
- WO-A2-2008/036908
- US-A1- 2006 101 813
- US-A1- 2008 132 405
- US-A1- 2008 292 519

## Description

### BACKGROUND OF THE INVENTION

### 1. Field of the Invention:

The present invention relates to a saddle-riding type vehicle such as a motorcycle or the like, and more particularly to a saddle-riding type vehicle including an internal combustion engine causing combustion at an air/fuel ratio smaller than a stoichiometric air/fuel ratio (i.e., a fuel-rich side air/fuel ratio).

### 2. Description of the Related Art:

For cleaning combustion gas (exhaust gas) discharged from an engine of a motor vehicle, three-way catalysts are in wide use. A three-way catalyst reduces or oxidizes CO (carbon monoxide), HC (hydrocarbon) and NOₓ (a nitrogen oxide) contained in the exhaust gas into water, carbon dioxide and nitrogen.

In order to efficiently perform reduction or oxidation using a three-way catalyst, it is preferable to cause combustion at an air/fuel ratio at which the fuel and air are combusted with no excessiveness or shortage (referred to as a "stoichiometric air/fuel ratio"). For this purpose, a system of detecting the concentration of oxygen in the exhaust gas by an oxygen sensor and performing feedback control on the amount of the fuel to be injected based on the detected concentration of oxygen such that the air/fuel ratio is the stoichiometric air/fuel ratio has been proposed.

However, an engine provides a higher output when causing combustion at an air/fuel ratio smaller than the stoichiometric air/fuel ratio (i.e., a fuel-rich side air/fuel ratio). For this reason, when the amount of the fuel to be injected is controlled such that the air/fuel ratio is always the stoichiometric air/fuel ratio, a sufficiently high engine output may not be obtained with a saddle-riding type vehicle such as a motorcycle, which has a smaller displacement than that of a four-wheel automobile. In addition, in order to perform a precise feedback control, it is necessary to generate mixed gas by an injection (fuel injection) system instead of a carburetor system currently in wide use for motorcycles. Such use of an injection system increases the production cost.

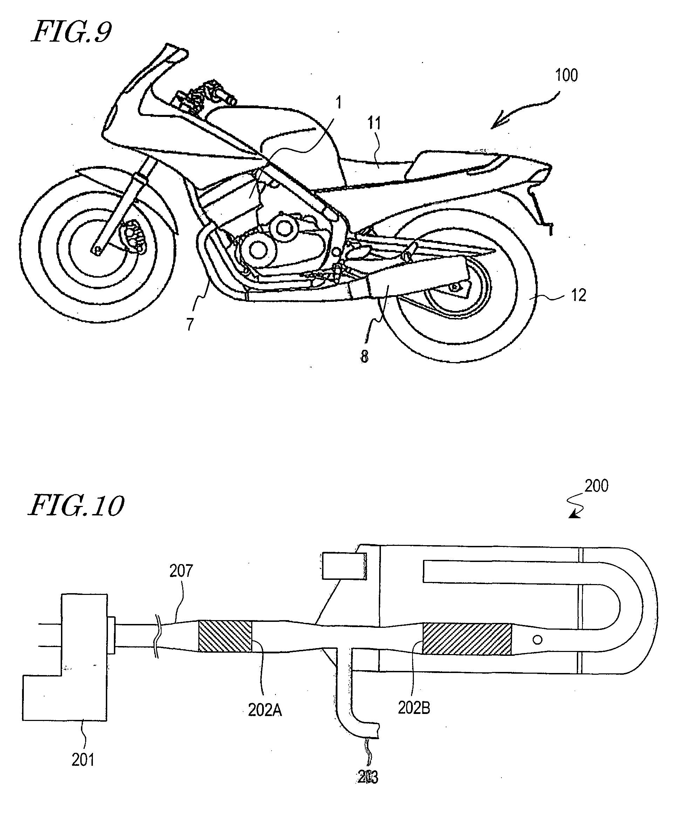

Pamphlet of International Publication No. 2004/113696 proposes an exhaust gas cleaning system for an engine causing combustion at a fuel-rich side air/fuel ratio. FIG. **10** shows an exhaust gas cleaning system **200** disclosed in Pamphlet of International Publication No. 2004/113696.

As shown in FIG. **10****,** the exhaust gas cleaning system **200** includes an engine **201** and an exhaust pipe **207** connected to an exhaust port of the engine **201.** In the exhaust pipe **207,** a first catalyst **202A** and a second catalyst **202B** located downstream with respect to the first catalyst **202A** are provided. A secondary air introduction pipe **203** for introducing secondary air is connected to a portion of the exhaust pipe **207**, the portion being between the first catalyst **202A** and the second catalyst **202B**. The first catalyst **202A** and the second catalyst **202B** have, for example, the same components as a known three-way catalyst.

[0007] In the exhaust gas cleaning system **200**, the engine **201** is driven at a fuel-rich side air/fuel ratio. Exhaust gas discharged from the engine **201** first contacts the first catalyst **202A**. A three-way catalyst provides a high NOₓ cleaning ratio with a fuel-rich side air/fuel ratio. Therefore, NOₓ in the exhaust gas is removed by the first catalyst **202A** until a required finial cleaning ratio is achieved. At this point, CO and HC in the exhaust gas are also partially removed.

Next, the secondary air introduced from the secondary air introduction pipe **203** is mixed with the exhaust gas which has passed the first catalyst **202A**, and thus the air/fuel ratio of the exhaust gas is shifted to a fuel-lean side. By the exhaust gas of a fuel-lean side air/fuel ratio contacting the second catalyst **202B**, the CO and HC in the exhaust gas which have not been removed are now removed.

That this system first causes the exhaust gas to contact the first catalyst **202A** under a reducing atmosphere to remove mainly NOₓ and then causes the exhaust gas to contact the second catalyst **202B** under an oxidizing atmosphere to remove the remaining CO and HC. Thus, CO, HC and NOₓ in the exhaust gas can be removed highly efficiently.

The exhaust gas cleaning system **200** described in Pamphlet of International Publication No. 2004/113696 allows the air/fuel ratio of the mixed gas supplied to the engine **201** to be smaller than the stoichiometric air/fuel ratio (i.e., to be set on the fuel-rich side). Therefore, the engine output of a saddle-riding type vehicle having a relatively small displacement can be improved to enhance the drivability thereof. In addition, this system functions sufficiently with the carburetor system used for generating mixed gas, which is advantageous over the injection system in terms of the cost.

However, as a result of detailed studies, the present inventors found that with the system disclosed in Pamphlet of International Publication No. 2004/113696, NOₓ is partially reduced by the first catalyst **202A** into ammonia (NH₃) instead of nitrogen (N₂) as described in detail later. The generated NH₃ is oxidized by the second catalyst **202B** to generate NOₓ. Therefore, in actuality, the NOₓ cleaning ratio cannot be made sufficiently high.

US 2006/101813 A1 discloses a muffler device with catalysts for improving purifying exhaust gas of nitrogen oxides within a motorcycle exhaust pipe. The muffler device comprises a muffler divided into three chambers, a first chamber, a second chamber, and a third chamber, a front exhaust pipe, a front reduction catalyst, a rear exhaust pipe provided with a secondary air inlet behind the reduction catalyst for introducing secondary air therein. Thereby, the exhaust gas from an engine with air-to-fuel ratio less than or equal to 14.7 will firstly pass the reduction catalyst to have its nitrogen oxides (NOₓ) effectively inverted into nitrogen and a scarce amount of oxygen, and then secondary air will be added to the exhaust gas so as to increase its air-to-fuel ratio to larger than 14.7, and finally the exhaust gas will pass the oxidation catalyst to have its carbon monoxide (CO) and hydrocarbons (HC) effectively inverted into carbon dioxide (CO₂) and water (H₂O).

US 2008/292519 A1 discloses catalysts, methods, and systems for treating diesel engine exhaust streams. The catalyst comprises platinum, a second metal from one of the groups VB, VIIB, VIIB, VIIIB, IB, or IIB of the periodic table, a refractory metal oxide, and a zeolite, the oxidation catalyst already being effective to remove ammonia at temperatures less than about 300 °C and exhibiting no significant decrease in ammonia oxidation efficiency upon hydrothermal aging. A method aspect includes first passing a vehicle's engine exhaust stream through a NOₓ abatement catalyst, and passing the exhaust stream exiting the NOₓ abatement catalyst and containing ammonia through the ammonia oxidation catalyst.

WO 2008036908 A2 discloses emission treatment systems for internal combustion engine exhaust streams, which reduce the carbon monoxide, unburned hydrocarbons, and nitrogen oxides content in the exhaust stream of an internal combustion engine adjusted to a rich combustion ratio. One system comprises an ammonia oxidation catalyst, a supplemental air supply upstream of the ammonia oxidation catalyst and for providing a lean combustion ratio, and at least one three-way catalyst. Another system further comprises a second three-way catalyst located in the exhaust stream.

### SUMMARY OF THE INVENTION

The present invention has been made in view of the above problems, and an objective thereof is to improve the NOₓ cleaning ratio in a saddle-riding type vehicle including an internal combustion engine causing combustion at an air/fuel ratio smaller than a stoichiometric air/fuel ratio.

A saddle-riding type vehicle according to the present invention comprises: an internal combustion engine causing combustion at an air/fuel ratio smaller than a stoichiometric air/fuel ratio; a first catalyst provided in an exhaust path to which combustion gas is discharged from the internal combustion engine; a second catalyst provided in the exhaust path downstream with respect to the first catalyst; and a secondary air introduction device for introducing secondary air to a portion of the exhaust path, the portion being between the first catalyst and the second catalyst, wherein, the first catalyst and the second catalyst each contain a precious metal component containing at least one of Pt, Rh, Pd, and Au; and the first catalyst further contains a zeolite carrier and Co or Fe being carried on the zeolite carrier in an amount which is greater than an ion-exchangeable amount thereof.

In a preferred embodiment, a carried amount of Co or Fe on the zeolite carrier is equal to or greater than twice the ion-exchangeable amount thereof.

In a preferred embodiment, a carried amount of Co or Fe on the zeolite carrier is 25wt% or less.

In a preferred embodiment, a carried amount of Co or Fe on the zeolite carrier is 20wt% or less.

In a preferred embodiment, the first catalyst contains Rh in a carried amount of 0.2g/L or more.

In a preferred embodiment, the internal combustion engine causes combustion at an air/fuel ratio of no less than 12.5 and no more than 14.5.

In a preferred embodiment, the saddle-riding type vehicle according to the present invention further comprises a muffler, wherein the first catalyst and the second catalyst are located in the muffler.

In a preferred embodiment, the first catalyst is distant from the internal combustion engine by 500 mm or more along the exhaust path.

A saddle-riding type vehicle according to the present invention includes, in an exhaust path, a first catalyst and a second catalyst provided downstream with respect to the first catalyst, and also includes a secondary air introduction device for introducing secondary air in a portion of the exhaust path, the portion being between the first catalyst and the second catalyst. Combustion gas (exhaust gas) discharged from the internal combustion engine, causing combustion at an air/fuel ratio smaller than a stoichiometric air/fuel ratio, first contacts the first catalyst and, after being mixed with the secondary air introduced by the secondary air introduction device, contacts the second catalyst. The first catalyst and the second catalyst each contain a precious metal component containing at least one of Pt, Rh, Pd, and Au. Therefore, NOₓ, a part of CO and a part of HC in the exhaust gas are first removed by the first catalyst, and then the remaining CO and HC are removed by the second catalyst. The first catalyst of the saddle-riding type vehicle according to the present invention contains Co or Fe and a zeolite carrier carrying Co or Fe. Co and Fe function as catalysts for decomposing ammonia (NH₃). The zeolite carrier functions not only as a carrier of Co and Fe, but also as a promoter when decomposing ammonia. Thus, since the first catalyst includes an ammonia decomposing component, NH₃ generated by the precious metal component in the first catalyst as a result of reducing NOₓ can be decomposed, and so the generation of NOₓ by the second catalyst can be suppressed. Hence, according to the present invention, the NOₓ cleaning ratio can be improved. Furthermore, according to the present invention, since Co or Fe which is an ammonia decomposing component is carried on a zeolite carrier in an amount greater than the ion-exchangeable amount, Co or Fe is present in the zeolite carrier in a highly active zero-valent state. As a result, the NOₓ cleaning ratio is further improved. Since the internal combustion engine of the saddle-riding type vehicle according to the present invention causes combustion at an air/fuel ratio smaller than a stoichiometric air/fuel ratio (i.e., at a fuel-rich side air/fuel ratio), a high output is obtained and the drivability is improved. Hence, the saddle-riding type vehicle according to the present invention is superb both in the running performance and the environmental performance.

The present invention can improve the NOₓ cleaning ratio in a saddle-riding type vehicle including an internal combustion engine causing combustion at an air/fuel ratio smaller than a stoichiometric air/fuel ratio.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

[FIG. **1**] A diagram schematically showing the construction of an exhaust gas cleaning system included in a saddle-riding type vehicle in a preferable embodiment of the present invention.

[FIG. **2**] A diagram schematically showing the structure of a zeolite.

[FIG. **3**] A graph showing a relationship between the amount of Co carried on a zeolite carrier and the generated amount of NOₓ.

[FIG. **4**] A diagram schematically showing how Co may be carried on a zeolite carrier, in the case where the carried amount of Co is equal to or less than an ion-exchangeable amount thereof.

[FIG. **5**] A diagram schematically showing how Co may be carried on a zeolite carrier, in the case where the carried amount of Co is greater than an ion-exchangeable amount thereof.

[FIG. **6**] A graph showing a relationship between a carried amount of Co (wt%) on a zeolite carrier and an NOₓ cleaning ratio, with respect to Examples 1 to 4 and Comparative Examples 1 and 2.

[FIG. **7**] A graph showing a relationship between the NOₓ concentration, NH₃ concentration, and the temperature of a first catalyst in exhaust gas which has passed the first catalyst.

[FIG. **8**] A diagram schematically showing the construction of an exhaust gas cleaning system included in a saddle-riding type vehicle according to a preferable embodiment of the present invention.

[FIG. **9**] A diagram showing an example of a motorcycle including an exhaust gas cleaning system as shown in FIG. **1** or FIG. **8**.

[FIG. **10**] A diagram schematically showing the construction of a conventional exhaust gas cleaning system.

### DETAILED DESCRIPTION OF PREFERRED EMBODIMENTS

Hereinafter, preferred embodiments of the present invention will be described with reference to the accompanying drawings. Note that the present invention is not limited to the following embodiments.

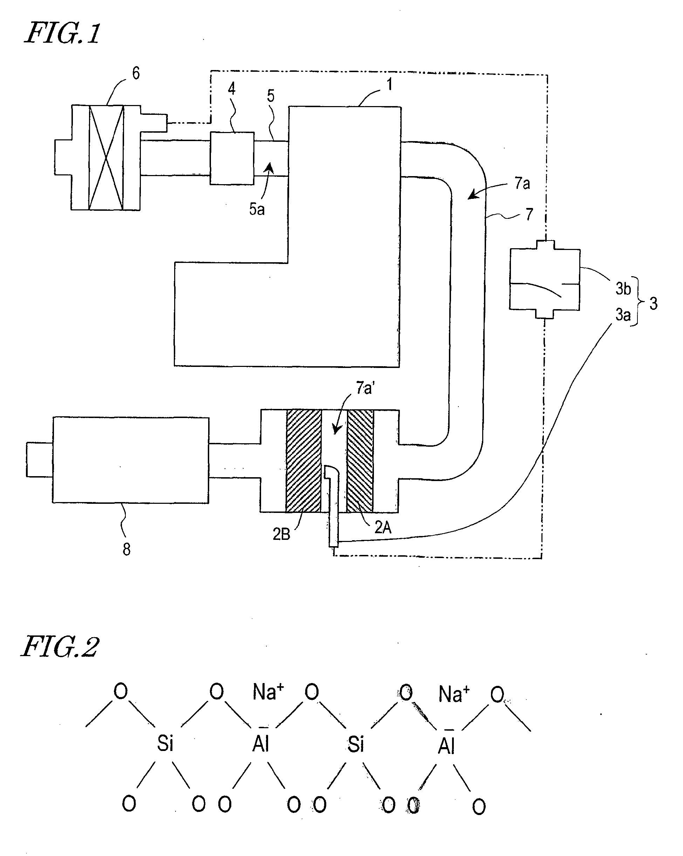

FIG. **1** schematically shows the construction of an exhaust gas cleaning system included in a saddle-riding type vehicle in the present embodiment. As shown in FIG. **1****,** the saddle-riding type vehicle in this embodiment includes an internal combustion engine **1,** a first catalyst **2A** and a second catalyst **2B,** and a secondary air introduction device **3.**

The internal combustion engine (typically, gasoline engine) **1** causes combustion at an air/fuel ratio smaller than a stoichiometric air/fuel ratio. Since the combustion is caused at an air/fuel ratio smaller than the stoichiometric air/fuel ratio, i.e., a fuel-rich side air/fuel ratio, a higher output is obtained than in the case where the combustion is caused at the stoichiometric air/fuel ratio. Typically, the combustion is caused at an air/fuel ratio of no less than 12.5 and no more than 14.5. The internal combustion engine **1** is supplied with mixed gas from a carburetor **4** via an intake path **5a**. The intake path **5a** is a space enclosed by an intake pipe **5** connected to an intake port of the internal combustion engine **1.** An air cleaner **6** is provided upstream with respect to the carburetor **4.**

The first catalyst **2A** is provided in an exhaust path **7a** to which combustion gas is discharged from the internal combustion engine **1.** The second catalyst **2B** is provided in the exhaust path **7a** downstream with respect to the first catalyst **2A.** The exhaust path **7a** is a space enclosed by an exhaust pipe **7** connected to an exhaust port of the internal combustion engine **1.**

The secondary air introduction device **3** introduces secondary air to a portion **7a'** of the exhaust path **7,** the portion **7a'** being between the first catalyst **2A** and the second catalyst **2B.** As shown in FIG. **1****,** the secondary air introduction device **3** includes, for example, a secondary air introduction pipe **3a** connected to the exhaust pipe **7** and a lead valve **3b** provided between the secondary air introduction pipe **3a** and the air cleaner **6.** The lead valve **3b** acts as a check valve for preventing a reverse flow of the secondary air supplied from the air cleaner **6** to the secondary air introduction pipe **3a.** The secondary air introduction device **3** may have any construction which can introduce the secondary air to a portion between the first catalyst **2A** and the second catalyst **2B,** and is not limited to having a construction shown herein. A muffler **8** for reducing exhaust noise is connected to a downstream end of the exhaust pipe **7.**

The first catalyst **2A** and the second catalyst **2B** each contain a precious metal component. The precious metal component specifically contains at least one of platinum (Pt), rhodium (Rh), palladium (Pd) and gold (Au). The precious metal component of each of the first catalyst **2A** and the second catalyst **2B** oxidizes CO and HC, and reduces NOₓ, in the combustion gas (exhaust gas) discharged from the internal combustion engine **1,** thus cleaning the combustion gas.

Furthermore, the first catalyst **2A** of the exhaust gas cleaning system in the present embodiment contains cobalt (Co) or iron (Fe) and a zeolite as a carrier for carrying Co or Fe ("zeolite carrier"). Co and Fe function as catalysts for decomposing ammonia (NH₃). The zeolite carrier functions not only as a carrier of Co or Fe, but also as a promoter when decomposing ammonia. Thus, the first catalyst **2A** contains an ammonia decomposing component.

Owing to the first catalyst **2A** and the second catalyst **2B** having the above-described construction, the exhaust gas cleaning system in the present embodiment can clean the exhaust gas from the internal combustion engine **1,** which causes combustion at a fuel-rich side air/fuel ratio, at a high efficiency. Especially, the exhaust gas cleaning system in the present embodiment can prevent the generation of NOₓ derived from NH₃, and thus can improve the final NOₓ cleaning ratio. Hereinafter, the reason for this will be described specifically.

First, the reason why the conventional exhaust gas cleaning system **200** shown in FIG. **10** cannot sufficiently improve the NOₓ cleaning ratio in the case where it is applied to an internal combustion engine which causes combustion at a fuel-rich side air/fuel ratio will be described. Table 1 shows reactions caused by each of the first catalyst **202A** and the second catalyst **202B** in the conventional exhaust gas cleaning system **200.**

**[Table 1]**

| Conventional exhaust gas cleaning system | | | |
|---|---|---|---|
| Reaction by the first tcatalyst | | Reaction by the second catalyst | |
| Main | CO+H₂O→CO₂+H₂ (1) | Main | |
| | -CH₂+H₂O→CO₂+H₂ (2) | | CO+O₂→CO₂ (6) |
| | 2NOₓ+ (2ₓ+3) H₂→2NH₃+2ₓH₂O (3) | | -CH₂+O₂→CO₂+H₂O (7) |
| Sub | 6NOₓ+4ₓNH₃→(2ₓ+3)N₂+6ₓH2O (4) | | 4NH₃+(2ₓ+3)O₂→4NOₓ+6H₂O (8) |
| | 2NH₃→N₂+3H₂ (5) | | |

As represented by chemical equations (1), (2) and (3), removal of CO, HC and NOₓ occurs at the first catalyst **202A.** Specifically, as respectively represented by chemical equations (1) and (2), CO and HC react with the H₂O contained in the exhaust gas to generate CO₂ and H₂. NOₓ reacts with the resultant H₂ to generate NH₃ and H₂O. A part of the NOₓ reacts with the NH₃ generated by the reaction of chemical equation (3) to be decomposed into N₂ and H₂O as represented by chemical equation (4). However, not all of the NH₃ is consumed by this reaction. The amount of NH₃ decomposed as represented by chemical equation (5) is very small. That is, in the conventional exhaust gas cleaning system **200,** since the internal combustion engine causes combustion at a fuel-rich side air/fuel ratio rather than at a stoichiometric air/fuel ratio, the amount of O₂ in the exhaust gas is small anyway. Therefore, while NOₓ is removed by the first catalyst **202A** located upstream, NH₃ is generated, and a part thereof is undesirably supplied to the second catalyst **202B.** This is a specific phenomenon that occurs when exhaust gas which is discharged from an internal combustion engine causing combustion at a fuel-rich side air/fuel ratio is subjected to cleaning by two catalysts (i.e., catalysts which are provided upstream and downstream with respect to a portion at which secondary air is introduced) while introducing secondary air.

By the second catalyst **202B,** as represented by chemical equations (6) and (7), the remaining CO and HC are removed. Specifically, as respectively represented by chemical equations (6) and (7), CO and HC react with the oxygen in the introduced secondary air, and are thus oxidized to generate CO₂, or CO₂ and H₂O. By the second catalyst **202B,** as represented by chemical equation (8), NH₃ is oxidized to undesirably generate NOₓ.

As described above, in the conventional exhaust gas cleaning system **200,** NOₓ is reduced into N₂ and also NH₃ by the first catalyst **202A,** and NH₃ is oxidized by the second catalyst **202B** to generate NOₓ. Therefore, the NOₓ cleaning ratio cannot be made sufficiently high.

Now, the reason why the exhaust gas cleaning system in the present embodiment can improve the NOₓ cleaning ratio in the case where it is applied to an internal combustion engine **1** which causes combustion at a fuel-rich side air/fuel ratio will be described. Table 2 shows reactions caused by each of the first catalyst **2A** and the second catalyst **2B** in the exhaust gas cleaning system in the present embodiment.

**[Table 2]**

| Exhaust gas cleaning system according to the present invention | | | |
|---|---|---|---|
| Reaction by the first catalyst | | Reaction by the second catalyst | |
| Main | CO+H₂O→CO₂+H₂ (1) | Main | |
| | -CH₂+H₂O→CO₂+H₂ (2) | | CO+O₂→CO₂ (6) |
| | 2NOₓ+(2ₓ+3)H₂-2NH₃+2ₓH₂O (3) | | -CH₂+O₂→CO₂+H₂O (7) |
| | 2NH₃-N₂+3H₂ (5) | | |

As represented by chemical equations (1), (2), and (3), removal of CO, HC, and NOₓ occurs at the first catalyst **2A.** As shown by chemical equation (3), NH₃ is generated due to reduction of NOₓ. Since the first catalyst **2A** in the present embodiment contains an ammonia decomposing component, the generated NH₃ is decomposed by a reaction represented by chemical equation (5). That is, by the first catalyst **2A** in the present embodiment, the ammonia decomposition reaction of chemical equation (5) occurs as a main reaction.

Accordingly, although the second catalyst **2B** causes removal of the remaining CO and HC as represented by chemical equations (6) and (7), the NH₃ oxidation reaction as represented by chemical equation (8) in Table 1 decreases. Therefore, the generation of NOₓ is suppressed.

Thus, the exhaust gas cleaning system in the present embodiment decomposes NH₃ (i.e., NH₃ generated as a result of reduction of NOₓ) with the ammonia decomposing component contained in the first catalyst **2A.** Since the generated amount of NH₃ is decreased by the first catalyst **2A** in advance, generation of NOₓ by the second catalyst **2B** is suppressed, whereby the NOₓ cleaning ratio is improved.

Moreover, the first catalyst **2A** of the exhaust gas cleaning system in the present embodiment contains Co or Fe as an ammonia decomposing component. Co and Fe allow the ammonia decomposition reaction represented by chemical equation (5) to occur efficiently under a reducing atmosphere. Moreover, the zeolite carrier can promote the ammonia decomposition reaction by Co or Fe (chemical equation (5)). A zeolite having a silica/alumina ratio (SiO₂/Al₂O₃ ratio) of 10 mol/mol or more can be suitably used. For example, an MFI-, FAU-, BEA-, or MOR-type zeolite can be suitably used. As an MOR (mordenite) type zeolite, those under the HSZ-600 series manufactured by TOSOH CORPORATION can be used, for example.

Furthermore, in the exhaust gas cleaning system in the present embodiment, Co or Fe is carried on the zeolite carrier in an amount which is greater than its ion-exchangeable amount. As used herein, an "ion-exchangeable amount" is the maximum amount of Co or Fe which can be taken into the zeolite through an ion exchange reaction as described below. In the present embodiment, the NOₓ cleaning ratio is further improved because the first catalyst **2A** contains Co or Fe being carried on the zeolite carrier in an amount which is greater than its ion-exchangeable amount. The reasons thereof will be described in detail below.

A zeolite is a crystal of aluminosilicate having micropores within the crystal. As schematically shown in FIG. **2**, a zeolite has a silicon dioxide backbone as its fundamental structure, such that the entire crystal lattice is negatively charged because some of the silicon is replaced by aluminum. Therefore, within its micropores, a zeolite contains cations (positive ions), e.g., sodium, thus maintaining an electric charge balance. When a zeolite having such a structure is placed in an aqueous solution which contains another kind of cations, an ion exchange occurs between the interior of the micropores and the interior of the aqueous solution. That is, in exchange for the cations which are released from its micropores, the zeolite takes in cations from within the aqueous solution.

In the case where a zeolite is used as a carrier of a catalyst metal, the above ion exchange reaction is generally utilized to allow the catalyst metal to be taken into the zeolite. Therefore, when Co or Fe is carried on a zeolite carrier (i.e., taken into its micropores as Co²⁺, Fe²⁺), usually, these elements will not be carried in an amount exceeding the ion-exchangeable amount.

On the other hand, as if to contradict the conventional technological knowledge, the first catalyst **2A** of the exhaust gas cleaning system in the present embodiment contains Co or Fe being carried on the zeolite carrier in an amount which is greater than its ion-exchangeable amount.

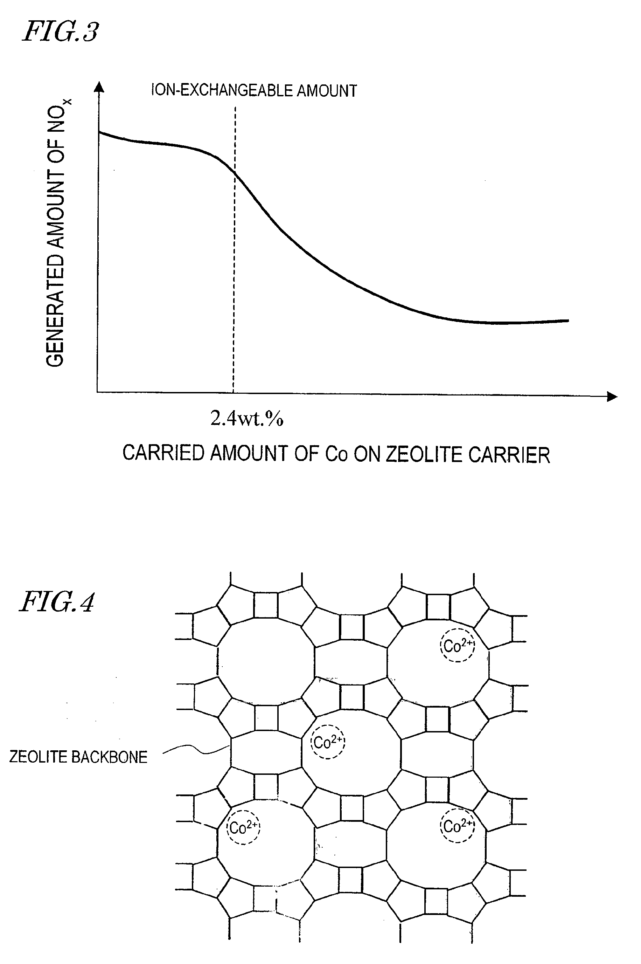

FIG. **3** shows an exemplary relationship between the amount of Co carried on a zeolite carrier and the generated amount of NOₓ. FIG. **3** illustrates a case where the ion-exchangeable amount of the zeolite carrier with respect to Co is about 2.4wt%.

As will be seen from FIG. **3**, when the carried amount of Co is greater than the ion-exchangeable amount, the generated amount of NOₓ decreases significantly. The presumable reason thereof, although not clear, may be that zero-valent Co(Co⁰) acts effectively as an active species in an ammonia decomposition reaction.

In the case where the carried amount of Co is equal to or less than the ion-exchangeable amount, as schematically shown in FIG. **4**, the Co carried on the zeolite carrier all exists as divalent cations (Co²⁺) which have been taken into the micropores through ion exchange. Since Co²⁺ is stable in this state, there is a low activity.

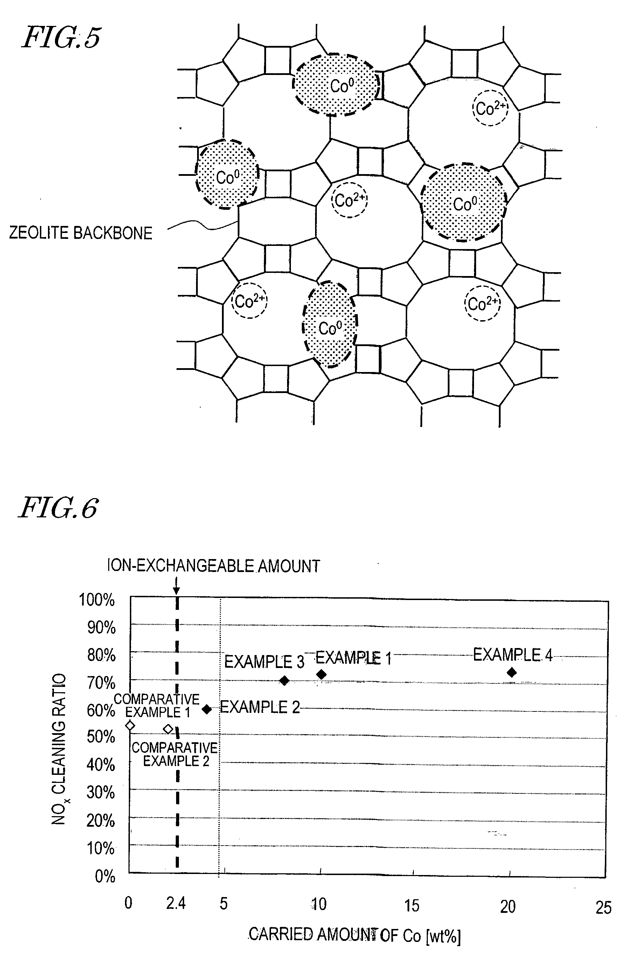

On the other hand, when the carried amount of Co is greater than its ion-exchangeable amount, as shown schematically in FIG. **5**, the Co carried on the zeolite carrier includes not only the Co²⁺ which has been taken into the micropores via ion exchange, but also zero-valent Co (Co°) which is carried at portions other than the micropores without undergoing ion exchange. Since the activity of Co° is higher than the activity of Co²⁺, the ammonia decomposition reaction is promoted as compared to the case where only Co²⁺ exists, and thus the NOₓ cleaning ratio is improved.

Note that FIG. **4** and FIG. **5** illustrate exemplary backbones of an MOR (mordenite) type zeolite. Although the backbone of a zeolite actually has a three-dimensional gridlike structure, it is shown in simplified forms in FIG. **4** and FIG. **5**.

Although the above description is directed to Co, the NOₓ cleaning ratio can be improved also with Fe for a similar reason, because of the carried amount being greater than the ion-exchangeable amount.

As a method for allowing Co (or Fe) to be carried on the zeolite carrier in an amount which is greater than the ion-exchangeable amount, for example, a method which is obtained by modifying the usual ion exchange-based carrying method (ion exchange technique) as follows can be used. In the usual ion exchange technique, after zeolite is placed in an aqueous solution containing Co (or Fe) ions to cause an exchange of cations in the zeolite and cations in the aqueous solution, a solid mass in the aqueous solution is taken out and washed, and then dried and baked. This is modified so that the amount of Co in the aqueous solution is greater than the zeolite's ion-exchangeable amount with respect to Co, and the aqueous solution containing the zeolite (i.e., containing Co in an amount greater than the ion-exchangeable amount) is evaporated to dryness and baked as it is. Thus, it is ensured that Co (or Fe) is carried on the zeolite carrier in an amount which is greater than its ion-exchangeable amount. It will be appreciated that the method of allowing Co (or Fe) to be carried is not limited to this method.

Now, a method of calculating an ion-exchangeable amount will be described. In the following calculation, values shown in Table 3 are used as the atomic weights of Si, Al, O, Fe, and Co.

**[Table 3]**

| | atomic weight |
|---|---|
| Si | 28.086 |
| Al | 26.982 |
| O | 16 |
| Fe | 55.845 |
| Co | 58.933 |

When a zeolite containing monovalent cations (e.g. Na⁺) within its micropores is used, an ion-exchangeable amount (mol) of this zeolite with respect to Co or Fe (both are to be taken in as divalent cations) is expressed by the following chemical equation:

ion-exchangeable amount [mol]=amount of cations in zeolite [mol]/2.

When a zeolite whose silica/alumina ratio (SiO₂/Al₂O₃ ratio) is 40 mol/mol is used, the rate A of Al atoms with respect to Si atoms in the zeolite is A=2/40=0.05. Therefore, the zeolite has the following average molecular weight: (atomic weight of Si) × (1-A)+(atomic weight of Al) × A+(atomic weight of O) X2=26.6817+1.3491+32=60.0308.

Therefore, the amount of substance of 1 g of a zeolite is 1/60.0308=0.016658 mol, whereas the amount of substance of the Al ions contained in 1 g of a zeolite is 0.016658×0.05=0.000833 mol. Since the amount of substance of Al ions is equal to the amount of substance of any monovalent cation in the zeolite, the ion-exchangeable amount with respect to Co or Fe of 1 g of zeolite is 0.000833/2≒ 0.00042 mol.

When expressed in terms of wt% of Co or Fe with respect to the zeolite carrier (that contains Co or Fe), this ion-exchangeable amount is 2.39549wt% for Co, and 2.272823wt% for Fe. That is, in the case where a zeolite whose silica/alumina ratio is 40 mol/mol is used as a carrier, the ion-exchangeable amount (wt%) is about 2.40wt% for Co, and about 2.27wt% for Fe.

As described above, in the exhaust gas cleaning system of the present embodiment, the NOₓ cleaning ratio can be greatly improved. As can also be seen from FIG. **3**, basically, the effect of decreasing the generated amount of NOₓ becomes higher as there is a larger carried amount of Co (or Fe) on the zeolite carrier. Therefore, from the standpoint of sufficiently decreasing the generated amount of NOₓ, it is preferable that the carried amount of Co (or Fe) is equal to or greater than twice the ion-exchangeable amount.

However, as shown in FIG. **3**, when the carried amount of Co (or Fe) on the zeolite carrier exceeds a certain amount, the generated amount of NOₓ will hardly change; that is, the effect of improving the NOₓ cleaning ratio will be saturated. Therefore, if the carried amount of Co (or Fe) is made excessive, there will be an increased amount of Co (or Fe) that does not contribute to the decomposition of NH₃. Moreover, if the carried amount of Co (or Fe) is made excessive, the thermal resistance may be deteriorated. Therefore, from the standpoint of reducing the production cost and ensuring a thermal resistance, the carried amount of Co (or Fe) is preferably 25wt% or less, and more preferably 20wt% or less.

Moreover, in order to allow the cleaning reactions of CO, HC, and NOₓ by the first catalyst **2A** to occur suitably, it is preferable that the first catalyst **2A** contains Rh such that the carried amount of Rh is 0.2 g/L or more.

Next, results of actually prototyping exhaust gas cleaning systems according to the present embodiment and studying effects thereof will be described.

Exhaust gas cleaning systems of Examples 1 to 7 and Comparative Examples 1 to 3 were produced as follows. Examples 1 to 6 are exhaust gas cleaning systems according to the present embodiment, where Co is contained in the first catalyst **2A** as an ammonia decomposing component in an amount which is greater than the ion-exchangeable amount. Example 7 is an exhaust gas cleaning system according to the present embodiment, where Fe is contained in the first catalyst **2A** as an ammonia decomposing component in an amount which is greater than the ion-exchangeable amount. On the other hand, the exhaust gas cleaning system of Comparative Example 1 does not contain any Co or Fe, i.e., ammonia decomposing component, in the first catalyst (upstream catalyst). In the exhaust gas cleaning system of Comparative Example 2, Co is contained in the first catalyst (upstream catalyst) in an amount which is smaller than the ion-exchangeable amount. In the exhaust gas cleaning system of Comparative Example 3, an alumina carrier is contained in the first catalyst instead of a zeolite carrier.

### (Example 1)

First, 24.7 g of cobalt nitrate hexahydrate was added to and dissolved in 100 g of distilled water, and furthermore 45 g of an MFI-type zeolite (having a Co ion-exchangeable amount of about 2.4wt%) having a silica/alumina ratio of 40 was added. After being stirred for 5 hours, this aqueous solution was evaporated to dryness, and then baked at 600°C, whereby 10wt% Co-zeolite was obtained. Next, 12.5 g of this 10wt% Co-zeolite, 50 g of distilled water, 26.5 g of γ alumina, 10 g of ceria, and 10 g of alumina sol (corresponding to 1 g of alumina) were placed in a ball mill and crushed, thus obtaining a slurry.

Next, a metal honeycomb having a diameter of 45 mm and a length of 60 mm, whose number of cells was 100 cpsi, was immersed in this slurry. With compressed air, excess slurry was blown away from the metal honeycomb having been taken out. Next, this metal honeycomb was dried at 120°C, and baked at 600°C, whereby a metal honeycomb having a total of 100 g/L of γ alumina, ceria, and Co-zeolite coated thereon was obtained.

Next, the coated metal honeycomb was immersed in 300 g of distilled water to which dinitro diamine platinum and rhodium nitrate had been added, and left for a predetermined period of time, thus allowing Pt and Rh to adsorb to the surface of the metal honeycomb. Thereafter, the metal honeycomb was dried at 120°C, and baked at 600°C, whereby a metal honeycomb carrying 1.0 g/L of Pt and 0.5 g/L of Rh was obtained. In this manner, a first catalyst **2A** containing precious metal components, a zeolite carrier, and Co being carried on the zeolite carrier in an amount greater than the ion-exchangeable amount was produced.

Next, a metal honeycomb having a diameter of 54 mm and a length of 60 mm, whose number of cells was 100 cpsi, was coated with a commercially-available oxidation catalyst material (Pt1.0 g/L, Rh0.5 g/L), thus producing a second catalyst **2B.**

Thereafter, the first catalyst **2A** was attached at an upstream portion of the exhaust path **7a,** and the second catalyst **2B** was attached at a downstream portion of the exhaust path **7a,** thus producing an exhaust gas cleaning system having the construction as shown in FIG. **1****.**

### (Example 2)

An exhaust gas cleaning system was produced in a similar manner to Example 1, except that the amount of cobalt nitrate hexahydrate used when producing the first catalyst **2A** was 9.3 g. The first catalyst **2A** contained 4wt% Co-zeolite.

### (Example 3)

An exhaust gas cleaning system was produced in a similar manner to Example 1, except that the amount of cobalt nitrate hexahydrate used when producing the first catalyst **2A** was 19.3 g. The first catalyst **2A** contained 8wt% Co-zeolite.

### (Example 4)

An exhaust gas cleaning system was produced in a similar manner to Example 1, except that the amount of cobalt nitrate hexahydrate used when producing the first catalyst **2A** was 55.6 g. The first catalyst 2A contained 20wt% Co-zeolite.

### (Example 5)

An exhaust gas cleaning system was produced in a similar manner to Example 1, except that the carried amount of Rh when producing the first catalyst **2A** was 0 g/L (whereas the carried amount of Pt was still 1.0 g/L).

### (Example 6)

An exhaust gas cleaning system was produced in a similar manner to Example 1, except that the carried amount of Rh when producing the first catalyst **2A** was 0.2 g/L (whereas the carried amount of Pt was still 1.0 g/L).

### (Example 7)

An exhaust gas cleaning system was produced in a similar manner to Example 1, except that, instead of 24.7 g of cobalt nitrate hexahydrate, 34.3 g of iron nitrate (III) nonahydrate was used when producing the first catalyst **2A.** The first catalyst **2A** contained 10wt% Fe-zeolite.

### (Comparative Example 1)

An exhaust gas cleaning system was produced in a similar manner to Example 1, except that the amount of cobalt nitrate hexahydrate used when producing the first catalyst **2A** was 0 g. The first catalyst **2A** contained a zeolite, but contained neither Co nor Fe.

### (Comparative Example 2)

An exhaust gas cleaning system was produced in a similar manner to Example 1, except that the amount of cobalt nitrate hexahydrate used when producing the first catalyst **2A** was 4.5 g. The first catalyst **2A** contained 2wt% Co-zeolite.

### (Comparative Example 3)

An exhaust gas cleaning system was produced in a similar manner to Example 1, except that, instead of an MFI-type zeolite, γ alumina was used when producing the first catalyst **2A.** The first catalyst **2A** contained 10wt% Co-γ alumina.

Table 4 shows results of, with respect to Examples 1 to 7 and Comparative Examples 1 to 3, attaching each prototyped exhaust gas cleaning system to a motorcycle having a displacement of 125cc, whose A/F was set in a range from 13.0 to 14.0, and measuring the NOₓ cleaning ratio while the motorcycle traveled in the ECE40 mode. The "carried amount of Co (carried amount of Fe)" column of Table 4 describes not only the carried amount (wt%) of Co(Fe) on the carrier (zeolite or alumina), but also the carried amount (g/L) of Co(Fe) in the entire first catalyst. The "carrier of Co (carrier of Fe)" column describes not only what the carrier of Co (carrier of Fe) is, but also the carried amount (g/L) of the carrier of Co (carrier of Fe) in the entire first catalyst. The "judgment" column indicates "⊚" if the NOₓ cleaning ratio is very high (specifically, 70% or more); "○" if it is sufficiently high (specifically, no less than 55% but less than 70%); and "×" if it is not sufficiently high (specifically, less than 55%). Moreover, FIG. **6** shows a relationship between the carried amount of Co (wt%) on the zeolite carrier and the NOₓ cleaning ratio, with respect to Examples 1 to 4 and Comparative Examples 1 and 2.

**[Table 4]**

| | precious metal component | | carried amount of Co (carried amount of Fe) | carrier of Co (carrier of Fe) | NOₓ cleaning ratio | judg- ment |
|---|---|---|---|---|---|---|
| | Pt(g/L) | Rh(g/L) | | | | |
| Example 1 | 1.0 | 0.5 | 10wt% (2.5 g/L) | MFI zeolite (22.5 g/L) | 72% | ⊚ |
| Example 2 | 1.0 | 0.5 | 4wt% (1.0 g/L) | MFI zeolite (24.0 g/L) | 59% | ○ |
| Example 3 | 1.0 | 0.5 | 8wt% (2.0 g/L) | MFI zeolite (23.0 g/L) | 70% | ⊚ |
| Example 4 | 1.0 | 0.5 | 20wt% (5.0 g/L) | MFI zeolite (20.0 g/L) | 74% | ⊚ |
| Example 5 | 1.0 | 0 | 10wt% (2.5 g/L) | MFI zeolite (22.5 g/L) | 61% | ○ |
| Example 6 | 1.0 | 0.2 | 10wt% (2.5 g/L) | MFI zeolite (22.5 g/L) | 72% | ⊚ |
| Example 7 | 1.0 | 0.5 | 10wt% (2.5 g/L) | MFI zeolite (22.5 g/L) | 65% | ○ |
| Comp. Example 1 | 1.0 | 0.5 | 0 | MFI zeolite (25.0 g/L) | 53% | × |
| Comp. Example 2 | 1.0 | 0.5 | 2wt% (0.5 g/L) | MFI zeolite (24.5 g/L) | 52% | × |
| Comp. Example 3 | 1.0 | 0.5 | 10wt% (2.5 g/L) | γ alumina (22.5 g/L) | 53% | × |

A comparison between Examples 1 to 7 and Comparative Examples 1 and 2 indicates that the NOₓ cleaning ratio is improved in Examples 1 to 7 (in which Co or Fe is carried on the zeolite carrier in an amount greater than the ion-exchangeable amount), as compared to Comparative Example 1 (in which no Co or Fe is contained) and Comparative Example 2 (in which Co is carried in an amount smaller than the ion-exchangeable amount). Moreover, a comparison between Examples 1, 3, 4, and 6 and Example 2 indicates that the NOₓ cleaning ratio is further improved when the carried amount of Co is greater than twice the ion-exchangeable amount.

Furthermore, a comparison between Examples 1 and 6 and Example 5 indicates that it is preferable for the first catalyst **2A** to contain Rh in a carried amount of 0.2 g/L or more. Moreover, a comparison between Example 1 and Comparative Example 3 indicates that it is preferable to use a zeolite as a Co carrier, rather than alumina.

As described above, the exhaust gas cleaning system according to the present embodiment can highly efficiently remove NOₓ in the combustion gas which is discharged from an internal combustion engine causing combustion at an air/fuel ratio smaller than a stoichiometric air/fuel ratio.

In the exhaust gas cleaning system according to the present embodiment, the NH₃ which is generated by the first catalyst **2A** located upstream is decomposed by an ammonia decomposing component contained in the first catalyst **2A.** In order to decompose NH₃, a construction would be possible in which not only an upstream catalyst but also a downstream catalyst (e.g., the second catalyst **202B** of the exhaust gas cleaning system **200** shown in FIG. **10****)** contains an ammonia decomposing component. However, in such a construction, oxidation of NH₃, CO and HC would occur substantially simultaneously under an oxidizing atmosphere, so that NH₃ would tend to be over-oxidized, thus allowing NOₓ to occur. Or, if the NOₓ generation were to be suppressed, the cleaning ratios of CO and HC would not be made sufficiently high, thus making it necessary to add still other oxidation catalysts as a compliment, thus resulting in an increased production cost. On the other hand, in the present embodiment, where the first catalyst **2A** contains an ammonia decomposing component, removal of NOₓ and decomposition of NH₃ can simultaneously occur under a reducing atmosphere, so that the aforementioned problem does not occur.

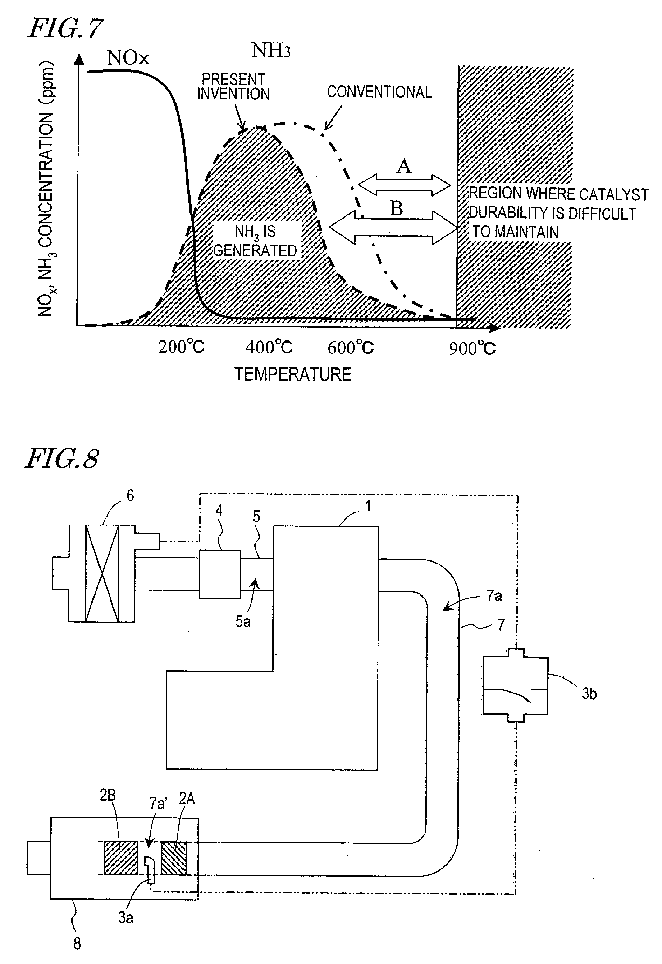

Moreover, in the exhaust gas cleaning system in the present embodiment, the first catalyst **2A** contains an ammonia decomposing component so that a sufficiently high NOₓ cleaning ratio can be realized at a lower temperature than conventionally. That is, the exhaust gas cleaning system in the present embodiment is preferably usable even at a lower temperature than conventionally. FIG. **7** is a graph showing, with respect to the exhaust gas cleaning system in the present embodiment and the conventional exhaust gas cleaning system **200,** a relationship between NOₓ concentration and NH₃ concentration in the exhaust gas which has passed the first catalyst, and temperature of the first catalyst.

As shown in FIG. **7****,** in the conventional exhaust gas cleaning system **200,** except for the region of 650°C or above, the NH₃ concentration is high, thus resulting in a low final NOₓ cleaning ratio. On the other hand, in the exhaust gas cleaning system in the present embodiment, since the first catalyst **2A** contains an ammonia decomposing component, the NH₃ concentration can be made sufficiently low at 550°C or above, so that the final NOₓ cleaning ratio can be made sufficiently high. Therefore, whereas the conventional exhaust gas cleaning system has a temperature range of use of 650°C to 900°C (arrow **A** in FIG. **7****),** the temperature range of use of the exhaust gas cleaning system in the present embodiment is 550°C to 900°C (arrow **B** in FIG. **7****).** The reason why the upper limit of the temperature range of use is 900°C in either case is that it becomes difficult to maintain durability of the catalysts at 900°C or above.

In the conventional exhaust gas cleaning system **200,** the first catalyst **202A** is placed somewhat near the engine **1** so that the temperature of the first catalyst **202A** will be rapidly increased. According to the present invention, since the temperature range of use of the exhaust gas cleaning system is expanded toward the lower-temperature side as described above, the first catalyst **2A** can be located at a position farther from the internal combustion engine **1** than conventionally. For example, in the conventional exhaust gas cleaning system **200,** the first catalyst **202A** is located at a position 150 mm to 400 mm away from the engine **201.** By contrast, in the exhaust gas cleaning system in the present embodiment, the first catalyst **2A** can be located at a position 150 mm to 600 mm away from the internal combustion engine **1.**

Generally speaking, the distance from an internal combustion engine to a muffler (distance along the exhaust path) is about 500 mm. In the exhaust gas cleaning system in the present embodiment, the first catalyst **2A** can be located away from the internal combustion engine **1** along the exhaust path **7a** by 500 mm or more. Therefore, as shown in FIG. **8****,** both of the first catalyst **2A** and the second catalyst **2B** can be located in the muffler **8.**

An area around the first catalyst **2A** and an area around the second catalyst **2B** have a high temperature because of the reaction heat caused by the cleaning reactions. Locating (accommodating) the first catalyst **2A** and the second catalyst **2B** in the muffler **8** as shown in FIG. **8** prevents peripheral elements from being softened or deteriorated (heat-damaged). Moreover, since there is no need to employ a thick exhaust pipe **7** in order to accommodate the first catalyst **2A** and the second catalyst **2B,** the layout of the exhaust pipe **7** is facilitated, whereby advantages in the external appearance (improvement of design, etc.) are also provided.

The exhaust gas cleaning system in the present embodiment provides a high NOₓ cleaning performance and therefore is suitably used for motorcycles. FIG. **9** shows a motorcycle **100** including the exhaust gas cleaning system in the present embodiment. The motorcycle **100** includes the engine (e.g., a 4-stroke gasoline engine) **1** which is located frontward of a seat **11** on which the rider sits, the exhaust pipe **7** which is connected to the exhaust port of the engine **1,** and the muffler **8** which is connected to the exhaust pipe **7** and provided near the rear wheel **12.** In the exhaust pipe **7,** although not shown, the first catalyst **2A** and the second catalyst **2B** are provided. The motorcycle **100** further includes the secondary air introduction device **3** for introducing secondary air to the exhaust pipe **7.**

In the motorcycle **100,** the engine **1** is driven at a fuel-rich side air/fuel ratio. Therefore, a high engine output is obtained and a high drivability is realized. The motorcycle **100** includes the above-described exhaust gas cleaning system and so can highly efficiently clean NOₓ contained in the exhaust gas from the engine **1** driven at a fuel-rich side air/fuel ratio. As a result, the motorcycle **100** is superb both in the running performance and the environmental performance.

In the construction shown in FIG. **1****,** the carburetor **4** is provided (carburetor system) as an example. Alternatively, the motorcycle **100** may have a construction including an injector (namely, mixed gas may be generated by the injection system).

The exhaust gas cleaning system in the present embodiment is not limited to being used in motorcycles and is suitably usable in any saddle-riding type vehicle on which a rider may sit astraddle. For example, the exhaust gas cleaning system in the present embodiment is usable for ATVs such as buggies. A saddle-riding type vehicle generally has a small displacement and so it is preferable that the internal combustion engine thereof is driven at a fuel-rich side air/fuel ratio. Therefore, it is highly meaningful to mount the exhaust gas cleaning system in the present embodiment.

In a single-cylindered saddle-riding type vehicle having a displacement of 400 cc or less, an internal combustion engine is placed frontward of a seat, and a muffler is placed near a rear wheel, thus resulting in a long distance from the internal combustion engine to the muffler. Therefore, when the first catalyst **2A** and the second catalyst **2B** are placed within the muffler, the temperature of the exhaust gas is likely to lower before the exhaust gas reaches these catalysts. However, according to the present invention, the temperature range of use of the exhaust gas cleaning system is expanded toward the lower-temperature side, thus allowing the first catalyst **2A** and the second catalyst **2B** to be placed within the muffler also in such as a saddle-riding type vehicle.

The present invention can improve the NOx cleaning ratio in a saddle-riding type vehicle including an internal combustion engine causing combustion at an air/fuel ratio smaller than a stoichiometric air/fuel ratio.

While the present invention has been described with respect to preferred embodiments thereof, it will be apparent to those skilled in the art that the disclosed invention may be modified in numerous ways and may assume many embodiments other than those specifically described above.

## Claims

1. A saddle-riding type vehicle comprising:
an internal combustion engine (1) causing combustion at an air/fuel ratio smaller than a stoichiometric air/fuel ratio;
a first catalyst (2A) provided in an exhaust path to which combustion gas is discharged from the internal combustion engine (1);
a second catalyst (2B) provided in the exhaust path downstream with respect to the first catalyst (2A); and
a secondary air introduction device (3) for introducing secondary air to a portion of the exhaust path (7a), the portion being between the first catalyst (2A) and the second catalyst (2B), wherein,
the first catalyst (2A) and the second catalyst (2B) each contain a precious metal component containing at least one of Pt, Rh, Pd, and Au, the vehicle being **characterised in that**
the first catalyst (2A) further contains a zeolite carrier and Co or Fe being carried on the zeolite carrier in an amount which is greater than an ion-exchangeable amount thereof.

2. The saddle-riding type vehicle of claim 1, wherein a carried amount of Co or Fe on the zeolite carrier is equal to or greater than twice the ion-exchangeable amount thereof.

3. The saddle-riding type vehicle of claim 1 or 2, wherein a carried amount of Co or Fe on the zeolite carrier is 25wt% or less.

4. The saddle-riding type vehicle of claim 1 or 2, wherein a carried amount of Co or Fe on the zeolite carrier is 20wt% or less.

5. The saddle-riding type vehicle of any one of claims 1 to 4, wherein the first catalyst contains Rh in a carried amount of 0.2g/L or more.

6. The saddle-riding type vehicle of any one of claims 1 to 5, wherein the internal combustion engine causes combustion at an air/fuel ratio of no less than 12.5 and no more than 14.5.

7. The saddle-riding type vehicle of any one of claims 1 to 6, further comprising a muffler, wherein
the first catalyst and the second catalyst are located in the muffler.

8. The saddle-riding type vehicle of claim 7, wherein the first catalyst is distant from the internal combustion engine by 500 mm or more along the exhaust path.

## Patentansprüche

1. Ein Fahrzeug vom rittlings zu fahrenden Typ, das folgende Merkmale aufweist:
einen Verbrennungsmotor (1), der eine Verbrennung bei einem Luft/Treibstoff-Verhältnis bewirkt, das kleiner ist als ein stöchiometrisches Luft/Treibstoff-Verhältnis;
einen ersten Katalysator (2A), der in einem Abgaspfad vorgesehen ist, an den Verbrennungsgas aus dem Verbrennungsmotor (1) ausgeleitet wird;
einen zweiten Katalysator (2B), der bezüglich des ersten Katalysators (2A) nachgelagert in dem Abgaspfad vorgesehen ist; und
eine Sekundärluft-Einbringvorrichtung (3) zum Einbringen von Sekundärluft in einen Abschnitt des Abgaspfads (7a), wobei sich der Abschnitt zwischen dem ersten Katalysator (2A) und dem zweiten Katalysator (2B) befindet, wobei
der erste Katalysator (2A) und der zweite Katalysator (2B) jeweils eine Edelmetallkomponente enthalten, die zumindest eines von Pt, Rh, Pd und Au enthält, wobei das Fahrzeug **dadurch gekennzeichnet ist, dass**
der erste Katalysator (2A) ferner einen Zeolith-Träger und Co oder Fe enthält, das in einer Menge auf dem Zeolith-Träger getragen wird, die größer ist als eine ionenaustauschfähige Menge desselben.

2. Das Fahrzeug vom rittlings zu fahrenden Typ gemäß Anspruch 1, bei dem eine getragene Menge an Co oder Fe auf dem Zeolith-Träger dem Doppelten oder mehr als dem Doppelten der ionenaustauschbaren Menge desselben entspricht.

3. Das Fahrzeug vom rittlings zu fahrenden Typ gemäß Anspruch 1 oder 2, bei dem eine getragene Menge an Co oder Fe auf dem Zeolith-Träger 25 Gew.-% oder weniger beträgt.

4. Das Fahrzeug vom rittlings zu fahrenden Typ gemäß Anspruch 1 oder 2, bei dem eine getragene Menge an Co oder Fe auf dem Zeolith-Träger 20 Gew.-% oder weniger beträgt.

5. Das Fahrzeug vom rittlings zu fahrenden Typ gemäß einem der Ansprüche 1 bis 4, bei dem der erste Katalysator Rh in einer getragenen Menge von 0,2 g/L oder mehr enthält.

6. Das Fahrzeug vom rittlings zu fahrenden Typ gemäß einem der Ansprüche 1 bis 5, bei dem der Verbrennungsmotor eine Verbrennung bei einem Luft/Treibstoff-Verhältnis von nicht weniger als 12,5 und nicht mehr als 14,5 bewirkt.

7. Das Fahrzeug vom rittlings zu fahrenden Typ gemäß einem der Ansprüche 1 bis 6, das ferner einen Schalldämpfer aufweist, wobei
sich der erste Katalysator und der zweite Katalysator in dem Schalldämpfer befinden.

8. Das Fahrzeug vom rittlings zu fahrenden Typ gemäß Anspruch 7, bei dem der erste Katalysator 500 mm oder mehr entlang des Abgaspfads von dem Verbrennungsmotor entfernt ist.

## Revendications

1. Véhicule à monture, comprenant:
un moteur à combustion interne (1) provoquant la combustion à un rapport air/carburant inférieur à un rapport air/carburant stoechiométrique;
un premier catalyseur (2A) prévu dans un trajet d'échappement vers lequel est évacué le gaz de combustion depuis le moteur à combustion interne (1);
un deuxième catalyseur (2B) prévu dans le trajet d'échappement en aval par rapport au premier catalyseur (2A); et
un dispositif d'introduction d'air secondaire (3) destiné à introduire de l'air secondaire dans une partie du trajet d'échappement (7a), la partie se trouvant entre le premier catalyseur (2A) et le deuxième catalyseur (2B),
dans lequel
le premier catalyseur (2A) et le deuxième catalyseur (2B) contiennent, chacun, un composant de métal précieux contenant au moins l'un parmi Pt, Rh, Pd et Au,
le véhicule étant **caractérisé par le fait que**
le premier catalyseur (2A) contient par ailleurs un porteur zéolite et Co ou Fe qui est transporté sur le porteur zéolite en une quantité qui est supérieure à une quantité d'échange d'ions de ce dernier.

2. Véhicule à monture selon la revendication 1, dans lequel une quantité transportée de Co ou Fe sur le porteur zéolite est égale ou supérieure à deux fois la quantité d'échange d'ions de ce dernier.

3. Véhicule à monture selon la revendication 1 ou 2, dans lequel une quantité transportée de Co ou Fe sur le porteur zéolite est de 25% en poids ou moins.

4. Véhicule à monture selon la revendication 1 ou 2, dans lequel une quantité transportée de Co ou Fe sur le porteur zéolite est de 20% en poids ou moins.

5. Véhicule à monture selon l'une quelconque des revendications 1 à 4, dans lequel le premier catalyseur contient Rh en une quantité transportée de 0,2 g/l ou plus.

6. Véhicule à monture selon l'une quelconque des revendications 1 à 5, dans lequel le moteur à combustion interne provoque une combustion à un rapport air/carburant de pas moins de 12,5 et pas plus de 14,5.

7. Véhicule à monture selon l'une quelconque des revendications 1 à 6, comprenant par ailleurs un silencieux, dans lequel
le premier catalyseur et le deuxième catalyseur sont situés dans le silencieux.

8. Véhicule à monture selon la revendication 7, dans lequel le premier catalyseur est distant du moteur à combustion interne de 500 mm ou plus le long du trajet d'échappement.
